# EUROPEAN PATENT APPLICATION

(11) **EP 1 839 961 A1**
(43) Date of publication of application: **03.10.2007**
(21) Application number: 06112131.5
(22) Date of filing: 31.03.2006
(51) Int. Cl.: B60R 21/0136, B60T 7/22

(54) **Pedestrian protection system**

(71) Applicant: IEE INTERNATIONAL ELECTRONICS & ENGINEERING S.A., 6468 Echternach (LU)
(72) Inventor: Petereit, Andreas, 54338 Schweich (DE); Gerdvordermark, Jens, 54338 Schweich (DE)
(74) Representative: Beissel, Jean

(57) **Abstract**

A pedestrian protection system (10) for a vehicle comprises an impact detector (12,14) for detecting a collision with a pedestrian and a brake assist (18) that is activeable by the impact detector (12,14) in case of such a collision.

## Description

### Technical field

The present invention generally relates to pedestrian protection system, in particular to a pedestrian protection system that takes up measures for protecting a pedestrian in case a collision has not been avoided.

### Background Art

Pedestrian protection systems are well known in the automotive field. For instance, WO 2005/110816 A1 discloses a pedestrian protection system for a motor vehicle that comprises an impact recognition sensor for recognising an impact of the motor vehicle with a pedestrian. WO 2003/082639 A1 describes an impact detector for detecting and evaluating an impact and generating an output signal to deploy a pedestrian protection system on a motor vehicle. The impact detector includes a sensor arrangement to be mounted at the front of the vehicle to detect an impact. An evaluator is provided to evaluate the output of the sensor and to generate an output signal when a predetermined threshold is exceeded, so that the pedestrian protection system is not actuated by an impact with a very light object. Additionally a chassis-mounted accelerometer is provided to provide a signal indicative of the total deceleration applied to the vehicle. An inhibitor is provided to inhibit generation of the signal that actuates the pedestrian protection system if the output signal from the accelerometer exceeds a predetermined threshold.

### Technical problem

It is an object of the present invention to provide an improved pedestrian protection system. This object is achieved by a pedestrian protection system as claimed in claim 1.

### General Description of the Invention

A pedestrian protection system for a vehicle comprises an impact detector for detecting a collision with a pedestrian and, according to an important aspect of the invention, a brake assist that is activatable by the impact detector in case of such a collision.

Those skilled in the art generally know brake assists (or brake assistants) as devices that recognise the driver's intention to perform an emergency braking operation and prepare or induce emergency braking in case they recognise this intention. Such a brake assist for motor vehicles is e.g. described in WO 2005/044652 A1. In the present case, a brake assist is provided that is activated by the impact detector if the latter detects that a collision with a pedestrian has occurred. Ultimately, the activation of the brake assist may reduce the stopping distance of the vehicle and thus the risk that the vehicle runs over the pedestrian in case the latter has been catapulted in front of the vehicle by the collision.

The activation of the brake assist may include that the brake assist prepares the vehicle for an emergency braking, while braking itself is only triggered by the driver. Preferably, however, the brake assist is configured so as to induce emergency braking in case of a collision with a pedestrian without waiting for the driver to trigger the braking. Especially if the driver has been surprised by the collision with the pedestrian, this may considerably reduce the time before braking action is initiated.

The brake assist may comprise control electronics and an electric pump to store pressurised brake fluid in a reservoir adjacent to the brakes. When such a brake assistant is triggered, e.g. by the driver or the impact detector, the control electronics initiate the release of varying amounts of the brake fluid to the brakes of the car, depending e.g. on car speed, within a very short time to perform the emergency braking. Most preferably, the brake assist is used in combination with or as a component of an anti-lock braking system.

According to a preferred embodiment of the invention, the pedestrian impact detector includes a sensor or a plurality of sensors for being arranged in a front bumper of the vehicle and an evaluation unit operationally connected to the sensor or the sensors and to the brake assist for providing a signal indicating a collision with a pedestrian to the brake assist. The said sensor or sensors may include e.g. an accelerometer, a force sensor, a pressure sensor a deformation sensor and/or a contact sensor. As will be appreciated, the control electronics of the brake assist and the evaluation unit of the impact detector can be integrated into a single microprocessor.

It should be noted that both the impact detector and the brake assist of the pedestrian protection system may comprise one or more inputs for receiving additional parameters of the vehicle, such as e.g. speed, axle load, etc.

According to another preferred embodiment, the pedestrian protection system comprises a communication unit for placing an emergency call in case of a collision. Advantageously, the emergency call includes the coordinates of the vehicle provided by a navigation system, the kind of the collision (car-pedestrian collision, car-car collision, etc.), the number of persons in the vehicle or the like.

Preferably, the pedestrian protection system is connected to the anti-collision lights of the vehicle in such a way that the pedestrian protection system switches on the anti-collision lights in case of a collision. The anti-collision lights will inform the other road users of the emergency braking, which increases traffic safety. The pedestrian protection system may be connected to the bus controlling the anti-collision lights or directly to these to switch the anti-collision lights.

The pedestrian protection system may also control the centrally controlled door-locking system in such a way that the centrally controlled door-locking system unlocks all vehicle doors in case of a collision. lf the car passengers are unable to open the vehicle doors because they are shocked or otherwise injured after a collision, this may allow a rescue team to more easily access the passenger compartment. Most preferably, the pedestrian protection system induces switching off the engine and closing the fuel line in case of a collision to reduce the risk of a fire.

### Brief Description of the Drawings

A preferred embodiment of the invention will now be described, by way of example, with reference to the accompanying drawings, in which:
Fig. 1 is a block schematic diagram of a basic pedestrian protection system;
Fig. 2 is a block schematic diagram of a more sophisticated passenger protection system.

### Description of Preferred Embodiments

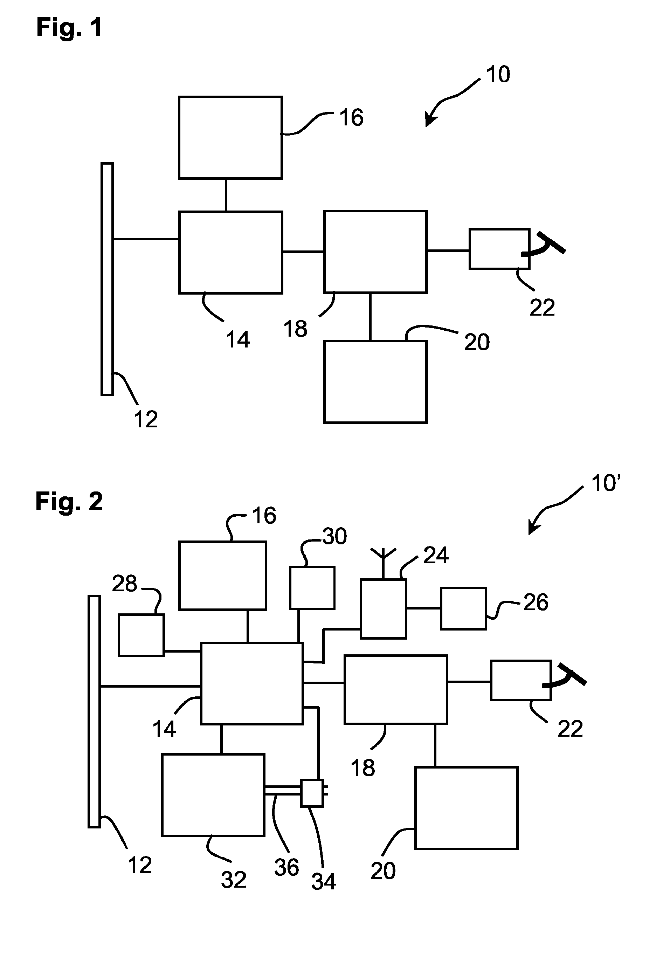

Fig. 1 shows a block schematic diagram of a basic pedestrian protection system 10. The pedestrian protection system 10 comprises a pedestrian impact detector 12, 14 that includes a sensor unit represented at reference numeral 12 and an evaluation unit 14. The sensor unit 12 includes one or more sensors. The sensor unit 12 is preferably arranged in the front bumper of a vehicle. The sensor unit 12 is illustrated having an elongated shape to indicate that it preferably extends or comprises sensors over the entire width of the front bumper. The sensor unit 12 is controlled by an evaluation unit 14, e.g. a microprocessor. The evaluation unit 14 also evaluates the state of the sensor unit 12 to determine whether a collision with a pedestrian occurred or not. Those skilled will be aware that there are different methods for detecting a collision and determining whether this collision involves a pedestrian. Preferably, the position of the impact on the bumper, the width of the impact zone and the force or pressure on the bumper are determined to achieve this.

When the evaluation unit 14 detects a collision with a pedestrian, a signal is sent to an active protection device 16, such as e.g. a pedestrian airbag or a hood lifting apparatus. This causes the active protection device 16 to deploy in order to provide best possible protection for the pedestrian when their body and/or their head hit the vehicle. Additionally, a signal is sent to the brake assist 18, which controls the brakes 20 of the vehicle. The brake assist 18 may then prepare the vehicle for emergency braking and initiate the emergency braking upon the driver operating the brake pedal 22. Preferably, however, upon receiving the signal indicating a collision with a pedestrian from the evaluation unit 14, the brake assist 18 immediately initiates emergency braking, i.e. without waiting for the driver to operate the brake pedal 22.

Fig. 2 show an embodiment of a more sophisticated pedestrian protection system 10'. The pedestrian protection system 10' comprises all the components of the pedestrian protection system 10, for which the same reference numeral are used.

In addition, the pedestrian protection system 10' comprises a communication unit 24 operationally connected to the evaluation unit 14. The communication unit 24 places an emergency call in case a collision is determined by the evaluation unit 14. The communication unit 24 is also connected to a navigation system 26, preferably a satellite navigation system such as a GPS receiver or a GALILEO receiver. In the emergency call the communication unit may insert any information that may be valuable for the rescue team, e.g. the kind of the collision (car-pedestrian collision, car-car collision, etc.) and the number of persons in the vehicle (if available).

The evaluation unit 14 is also connected to the anti-collision lights 28 of the vehicle to switch them on in case of a collision. The evaluation unit 14 is additionally connected to the centrally controlled door-locking system 30, which unlocks all vehicle doors in case of a collision. Furthermore, the evaluation unit 14 is connected to the engine 32 and to a valve 34 in the fuel line 36 to induce switching off the engine and closing the fuel line 36 in case of a collision.

## Claims

1. A pedestrian protection system for a vehicle comprising
an impact detector for detecting a collision with a pedestrian
**characterized by** a brake assist activatable by said impact detector in case of a collision with a pedestrian.

2. The pedestrian protection system according to claim 1, wherein said brake assist is configured so as to induce emergency braking in case of a collision with a pedestrian.

3. The pedestrian protection system according to claim 1 or 2, wherein said impact detector includes a sensor for being arranged in a front bumper of said vehicle and an evaluation unit operationally connected to said sensor and to said brake assist for providing a signal indicating a collision with a pedestrian to said brake assist.

4. The pedestrian protection system according to claim 3, wherein said sensor comprises an accelerometer and/or a force sensor and/or a pressure sensor and/or a deformation sensor and/or a contact sensor.

5. The pedestrian protection system according to any one of claims 1 to 4, comprising a communication unit for placing an emergency call in case of a collision.

6. A vehicle comprising a pedestrian protection system according any one of claims 1 to 5 and anti-collision lights, wherein said pedestrian protection system is connected to said anti-collision lights in such a way that said pedestrian protection system switches on said anti-collision lights in case of a collision.

7. A vehicle comprising a pedestrian protection system according any one of claims 1 to 5 and a centrally controlled door-locking system, wherein said pedestrian protection system controls said centrally controlled door-locking system in such a way that said centrally controlled door-locking system unlocks all vehicle doors in case of a collision.

8. A vehicle comprising a pedestrian protection system according any one of claims 1 to 5 and an engine, wherein said pedestrian protection system induces switching off said engine in case of a collision.

9. A vehicle comprising a pedestrian protection system according any one of claims 1 to 5 and a fuel line, wherein said pedestrian protection system induces closing said fuel line in case of a collision.
